# EUROPEAN PATENT APPLICATION

(11) **EP 4 494 910 A1**
(43) Date of publication of application: **22.01.2025**
(21) Application number: 23187019.7
(22) Date of filing: 21.07.2023
(51) Int. Cl.: B60K 11/08

(54) **AERO SHUTTER FOR A VEHICLE**

(71) Applicant: Wuhan Lotus Cars Co., Ltd., Wuhan, Hubei (CN)
(72) Inventor: Wiech, Thomas, 64295 Darmstadt (DE); Sturm, Ralph, 63150 Heusenstamm (DE)
(74) Representative: Fuchs Patentanwälte Partnerschaft mbB

(57) **Abstract**

The invention concerns an aero shutter (10) for a vehicle, comprising:
- a frame member (12) having at least one opening (18) through which air can flow;
- at least a first flap (14),
- at least a first connecting member (24) and a second connecting member (26);
wherein each of the first connecting member (24) and the second connecting member (26) is connected to the first flap (14) by a respective first pivot joint (28), and wherein each of the first connecting member (24) and the second connecting member (26) is connected to the frame member (12) by a respective second pivot joint (30),
wherein the first and the second connecting member (24, 26) are rotatable about their respective first and second pivot joints (28, 30) so as to move the first flap (14) between a closed state in which it covers at least part of the opening (18) and an opened state in which it does not cover the opening (18) or only covers a smaller part thereof compared to the closed state.

## Description

The invention relates to an aero shutter for a vehicle. The vehicle may be a road vehicle, such as a car, a truck or a bus. More specifically, the invention relates to an aero shutter having a flap supported by multiple connecting members and pivot joints.

Aero shutters at or near a front face of a vehicle adjust the air resistance to a current driving situation: The air resistance is lower when they are closed. As a result, fuel consumption is lower. With the shutters open, maximum cooling of the engine compartment is enabled. Also, this may assist the A/C-system. Aero shutters which are configured to change between respective opened and closed states are also referred to as active aero shutters.

Typically, active aero shutters comprise several vanes which are connected to each other and rotate in the same direction. This rotation can be driven by an actuator. The vanes are oriented either vertically or horizontally and all rotate around either a horizontal or a vertical axis. An example can be found in WO 2014/150140 A1.

WO 2022/161621 A1 discloses an active aero shutter having counterrotating closing plates which are rotating in several angles.

There remains room for improvement in the design of aero shutters e.g. in terms of a space occupied by the aero shutter within the vehicle, in terms of degrees of freedom in design or in terms of structural complexity.

It is thus an object of the invention to further improve a vehicle aero shutter, in particular with respect to at least one of the above parameters.

This object is solved by the subject-matter of independent claim 1. Further embodiments are defined in the dependent claims, in this description and in the figures of this disclosure.

### Summary of the invention

Accordingly, an aero shutter for a vehicle is disclosed, the aero shutter comprising:
a frame member having at least one opening through which air can flow;
at least a first flap,
at least a first connecting member and a second connecting member;
wherein each of the first connecting member and the second connecting member is connected to the first flap by a respective first pivot joint, and wherein each of the first connecting member and the second connecting member is connected to the frame member by a respective second pivot joint,
wherein the first and the second connecting member are rotatable about their respective first and second pivot joints so as to move the first flap between a closed state in which it covers, or in other words: obstructs or closes, at least part of the opening and an opened state in which it does not cover the opening or only covers a smaller part thereof compared to the closed state.

This aero shutter may also be referred to and/or represent an active aero shutter. In particular, the aero shutter may be connectable to an actuator that is configured to move the first flap between the closed and opened state. This may e.g. be achieved by the actuator pushing and/or pulling at least one of the first and second connecting member, so that these move in the manner disclosed herein.

The frame member may be a skirt member, in particular a front skirt member. Alternatively, it may be comprised by such a skirt member. The frame member may be a single-part member or a multi-part member.

The opening may define a through-hole or a cut-out in the skirt member. In particular, the opening may have a closed circumference. The flap may contact the opening and in particular its preferably closed circumference in the closed state. This increases airtightness of the closed aero shutter.

The first and second pivot joints may each enable rotations about a rotation axis and in particular about only one rotation axis. For example, the first and second pivot joints may be configured as pivot bearings and/or as pin-recess-couplings. In the latter case, a pin provided at a first member (e.g. a connecting member) may be rotatably received in a recess provided at a second member (e.g. the first flap), so that the first and second member may rotate relative to one another.

The first and second connecting members may be configured as rods or as other elongated members. The first and second connecting members are not limited to certain cross-sectional shapes or to any shapes in general. For example, the first and second connecting members may e.g. be straight or linear members, but may also be curved or angled. According to embodiments, the first and second connecting members are elongated flat, elongated circular and/or elongated plate-shaped members.

The first and second connecting member may each be connected to at least one of the first and second pivot joint at one of their end portions. For example, in particular when the first and second connecting members are elongated members, they may have at least two opposite end portions. These are e.g. spaced part from one another along a longitudinal axis of the connecting member.

The first flap may be a plate-shaped member, but may not necessarily be planar. A face of the first flap covering the opening may be sized to extend beyond the opening in the closed state. This may help to increase an overlap and thus an airtightness between the first flap and the opening. In one example, the opening and in particular an edge portion thereof may provide a seat against which at least a section of the first flap may rest in the closed state.

By coupling the two pivoted connecting members to the first flap, wherein this coupling also includes pivot joints, the degrees of freedom for defining a movement path of the first flap when changing between the closed and opened state are increased. Also, this increase in the degrees of freedom is achieved with a limited number of parts. In particular, a movement path of the first flap may be defined which requires only a limited free space around the first flap, thereby reducing the overall size requirements of the aero shutter.

The first flap may be configured to perform a rotating motion and/or swivelling motion when changing between the closed and opened state. Such motions of the first flap can be performed in a space-efficient manner, thus limiting the overall space requirements of the aero shutter. A rotation axis of the rotating motion and/or swivelling motion of the flap may extend in parallel to the axes of rotation of the first pivot joints. Generally, the motion when changing between the closed and opened state may be guided and/or defined by the first and second connecting members.

The first flap may be configured to move inwardly and in particular rotate inwardly when changing from the closed state to the opened state. This is aerodynamically efficient and helps to simplify the structure required for moving the first flap. For example, when viewed from an outside of the vehicle and/or when looking at a front face of the frame member, the first flap may be configured to move and in particular rotate towards the inside of the vehicle. Differently put, the first flap may at least partially be sunken or retracted into the vehicle and/or frame member when changing from the closed to the opened state.

According to one embodiment, the first pivot joints are positioned at edge regions of the first flap, in particular at different edge regions and further in particular at opposite edge regions. This allows for spacing the first pivot joints significantly apart from one another which helps improve space efficiency of the rotating movement of the first flap. The edge regions may e.g. extend in parallel to the rotation axes of the first pivot joints and/or of the first flap. The edge regions may e.g. face adjacent edges of the frame member, said adjacent edges in particular delimiting the opening.

A further embodiment provides that a distance between the first pivot joints is at least half as large as a width dimension of the first flap, wherein the width dimension extends orthogonally to rotation axes of the first pivot joints and/or to the rotation axis of the first flap.

Generally, the first pivot joints may be located at a common face or common side of the first flap, in particular at a vertically upper face. Said side or face may extend at an angle and in particular orthogonally to the rotation axes of the first pivot joints and/or the first flap. Yet again, the first pivot joints may be positioned at different and in particular opposite edges of said common face or common side of the first flap.

To reduce complexity, a (e.g. vertically lower) face of the first flap that is opposite to the above-discussed common face may not be linked to any first and second connecting members by any first pivot joints. For example, the first and second connecting members and first and second pivot joints may be the only connecting members and pivot joints to which the first flap is connected (and/or generally the only members for moving the first flap between the closed and opened state).

Additionally or alternatively, the second pivot joints may be spaced apart from one another. For example, they may be spaced apart along an axis extending orthogonally to their respective rotation axes. For achieving a space efficient movement of the first flap, according to one embodiment a distance between the first pivot joints is larger than a distance between the second pivot joints.

In one aspect, the axes of rotation of the first and second pivot joints extend in parallel to the opening. For example, the opening may be defined or be regarded as a two-dimensional open cross-sectional area. The axes of rotation of the first and second pivot joints may thus extend in parallel to or, e.g. in case of the first pivot joints and/or at least in the closed state, coincide with said cross-sectional area.

According to a further embodiment, the first flap has a least one portion that in the closed state overlaps with an edge region of the frame member, wherein said edge region is adjacent to and/or delimits the opening. When viewed from an outside of the vehicle and e.g. looking at a front face of the frame member, the overlap may be provided at a rear side of the frame member. This simplifies a movement when opening the first flap. Generally, providing a respective overlap helps to improve airtightness of the aero shutter when closed.

It may be provided the first flap has at least one protruding section that in the closed state protrudes relative to the opening. The protruding section may be comprised by a front face of the first flap that faces outwardly and/or that is received in or extends through the opening. The protruding section may in particular protrude further outward or forward than the frame member. For example, the protruding section may protrude with respect to the frame member and in particular with respect to a front face thereof. In still other words, when viewed along a longitudinal axis of the vehicle, the protruding section may protrude with respect to the opening and/or frame member and may in particular protrude forward. The protruding section can help to improve the aerodynamics, e.g. by acting as an air guiding element which guides the air towards and along the frame member.

In this connection, the protruding section may be connected to at least one edge region of the first flap by an angled section or a curved section. This further promotes aerodynamic efficiency in that the angled or curved section helps to smoothly guide air towards the frame member. The edge region may in particular extend in parallel to a rotation axis of the first flap and/or of at least one of the first and second pivot joints. The edge region of the first flap may e.g. overlap with, be adjacent to and/or face an edge region of the frame member which delimits the opening.

Additionally or alternatively, in the closed state, at least a portion of an outwards facing front face of the first flap is substantially aligned with and/or extends in parallel to at least a portion of an outwards facing front face of the frame member. Any of said portions may e.g. amount to at least a quarter or at least half of the respective entire front face.

In the opened state, the first flap may extend at a larger angle to the frame member compared to the closed state, in particular wherein said angle is at least 25° larger than in the closed state. This enables a significant movability of the flap so as to provide a large air inlet when opened.

This angle may again be defined between at least a portion of the front face of the first flap and a at least a portion of the front face of the frame member, wherein at least in the closed state said front faces face outwards. Alternatively, a centre plane or a middle plane of the first flap may be considered. With respect to the frame member, in particular a portion of its front face that comprises an edge region delimiting at least a portion of the opening may be considered. The angle between said front faces may e.g. be larger than 45° and in particular larger than 75°, e.g. up to 90° or more. For example, in the opened state, the first flap may e.g. extend substantially orthogonally to the opening. Additionally or alternatively, in the closed state, an angle between the first flap and the front face of the frame member may be less than 45° and/or less than 25°.

According to a further embodiment, in the opened state, at least the largest part of the first flap does not protrude to the outside relative to the opening. Rather, the first flap may at least partially and in particular mostly be retracted with respect to opening and/or the frame member. This improves aerodynamics.

In a further embodiment, the aero shutter further comprises a second flap and a further first connecting member and a further second connecting member, wherein each of the further first connecting member and the further second connecting member is connected to the second flap by a respective (e.g. further) first pivot joint, and wherein each of the further first connecting member and the further second connecting member is connected to the frame member by a respective (e.g. further) second pivot joint. The second flap may be movable between an opened state and a closed state in a similar manner as the first flap. Generally, the second flap may function and/or be operable similar to the first flap. In one example, it is similarly sized and/or shaped compared to the first flap. The first flap and the second flap may jointly at least partially close the opening in the closed state. On the other hand, in their respective opened states, the opening may be unobstructed to a larger degree compared to the closed state.

By providing a second flap, the cross-section of the opening can be increased but can still reliably be closed with an overall compact structure. For example, it may be less space-efficient to accommodate a single large flap in its opened state within the vehicle compared to accommodating two small flaps which, moreover, are typically spaced apart from one another. In particular, the first flap may be arranged adjacent to and/or overlap with a first edge region of the frame member and/or opening, whereas the second flap may be arranged adjacent to and/or overlap with an opposite second edge region of the frame member and/or opening.

According to one example, the first flap and the second flap are arranged and/or are dimensioned and/or are shaped in a mirror-symmetrical manner. An axis of contact between the first flap of the second flap - and/or an axis along which edges of the first flap of the second flap extend and face one another - may form a respective axis of mirror symmetry. In one aspect, the first flap and the second flap are jointly movable between their opened and closed states.

In a further embodiment, at least one of the first connecting member and second connecting member connected to the first flap is coupled to the further first connecting member or further second connecting member connected to the second flap, so that a rotation of the coupled one of the first connecting member and second connecting member results in a rotation of the respectively coupled further first connecting member or further second connecting member. This may help to achieve a joint movability of the first flap and the second flap with a simple structure. For example, this enables providing only one actuator for moving the first and second flap. Said actuator may e.g. be directly connected to only the respectively coupled one of the first connecting member and second connecting member.

The coupling between the respective one of the first connecting member or second connecting member and the further first connecting member or further second connecting member may e.g. comprise a pin-slot-coupling (put differently: a pin-slot-guide). The pin and/or slot may be shaped and/or dimensioned to produce a desired movement of the coupled one of the further first connecting member or further second connecting member. Generally, any coupling between the first connecting member and second connecting member may be configured to convert a movement of the coupled one of the first connecting member or second connecting member into a desired movement of the respectively coupled one of the further first or further second connecting member.

According to one embodiment, the first flap and second flap are configured to rotate in opposite directions for (or when) changing between the closed state and the opened state. For example, the first flap may be rotatable in a first direction to change from its closed to its opened state, whereas the second flap may be rotatable in an opposite second direction.

### Brief description of the drawings

Embodiments of the invention are discussed in the following with respect to the attached schematic figures. Similar features may be marked with same reference signs throughout the figures.
Figures 1-3 show an aero shutter according to a first embodiment of the invention with the aero shutter changing from a fully closed state (Figure 1) to a partially opened state (Figure 2) to a fully opened state (Figure 3).
Figure 4 is a perspective detail view of the kinematic structure of the aero shutter of the first embodiment.
Figures 5-7 are schematic views of the kinematic structure of the aero shutter of the first embodiment with the aero shutter changing from a fully closed state (Figure 5) to a partially opened state (Figure 6) to a fully opened state (Figure 7).

### Detailed description of the drawings

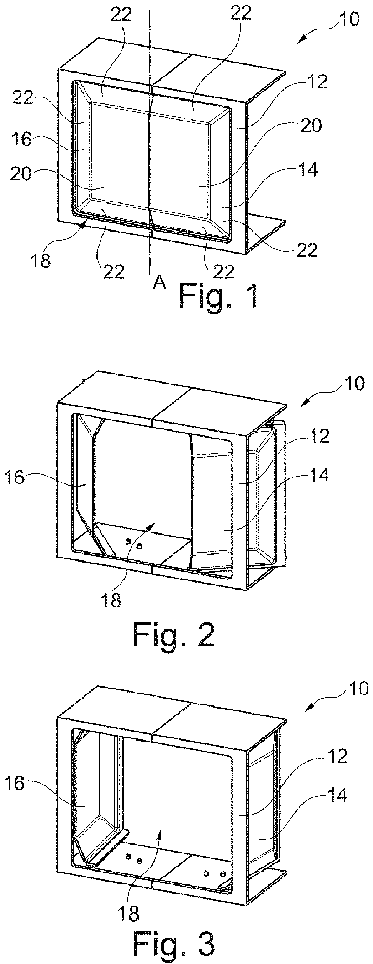

Figure 1 shows an aero shutter 10 that is e.g. comprised by a non-illustrated front skirt of a vehicle. The vehicle may comprise a plurality of respective aero shutters 10. These may e.g. be jointly arranged in the non-illustrated front skirt. In Figures 1-3, a front face of the aero shutter 10 that faces outwardly into the surroundings faces the viewer.

The aero shutter 10 comprises a frame member 12 which may e.g. be an integral part of the non-illustrated front skirt. Further, the aero shutter 10 comprises a first flap 14 and a second flap 16. These are shown in their respective closed states in which each of them fully covers or, put differently, fully obstructs half of an opening 18 in the frame member 12.

It can be seen that the first flap 14 and the second flap 16 are identically shaped and dimensioned. They are mirror-symmetrically arranged with respect to an axis A along which they contact or at least face each other in the closed state. Further, in the closed state, the first flap 14 and the second flap 16 (e.g. at least a main or central plane thereof) substantially extend in parallel to a cross-sectional area of the opening 18 and/or to surrounding edge regions of the frame member 12.

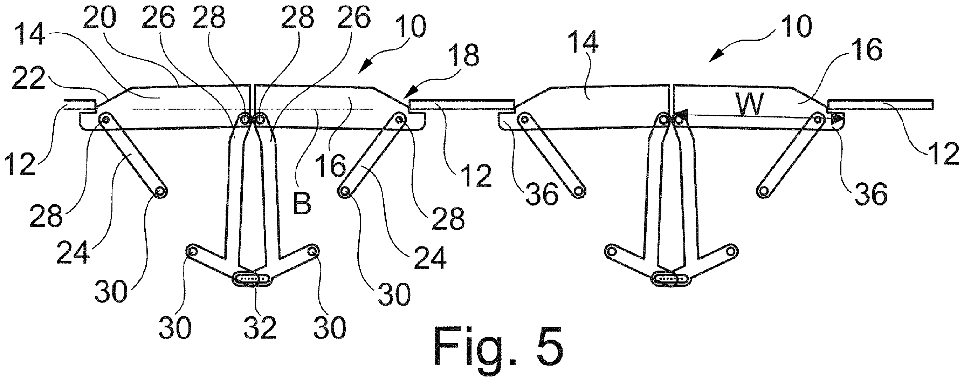

Further, each of the first and second flap 14, 16 has a protruding section 20 that protrudes outwardly with respect to the frame member 12. This protruding section 20 is connected to outer edges of the respective first and second flap 14, 16 by angled or sloped sections 22 (see also Figure 5 discussed below). These outer edges face or even contact adjacent edge regions of the frame member 12 - at least in the closed state. These adjacent edge regions delimit the opening 18.

The protruding sections 20 together with angled sections 22 guide air from the closed first and second flap 14, 16 towards the frame member 12 in an aerodynamically efficient manner.

Fig. 2 shows a configuration in which the aero shutter 10 is partially open. Specifically, the first and second flaps 14, 16 have been rotated inwards and in opposite directions to open up a portion of the opening 18. This way, air can stream into the opening 18 from outside and thus into the interior of e.g. an engine bay of the vehicle. In this state, the first and second flaps 14, 16 no longer contact one another and a distance between them has increased. Also, an angle between each of the first and second flaps 14, 16 and the cross-sectional area of the opening 18 and/or the frame member 12 has significantly increased, e.g. from substantially 0° to approximately 45°.

Figure 3 shows a configuration in which the aero shutter 10 is fully open. Compared to Figure 2, the first and second flaps 14, 16 have rotated even further in their respectively opposite directions. Therefore, the above discussed distances and angles have further increased, e.g. up to approximately 90°. As a result, a cross-sectional area of the opening 18 is almost fully unobstructed by the first and second flaps 14, 16.

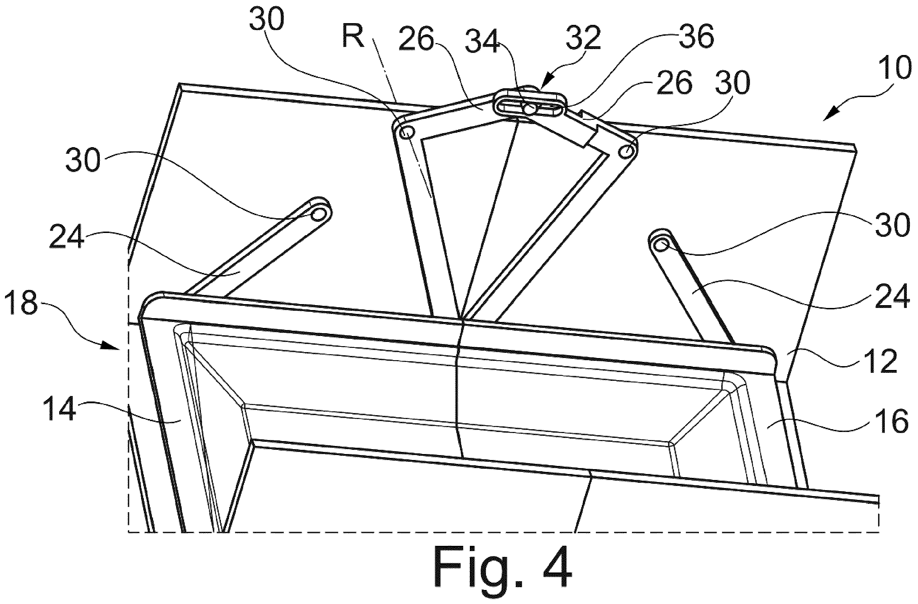

Figure 4 is a rear view of the aero shutter 10 in the closed state of Figure 1. In this view, a rear side of the aero shutter 10 that faces an interior of the vehicle is oriented towards the viewer.

Accordingly, the rear sides of the first and second flap 14, 16 are visible. Also, a number of first and second connecting members in from of rods 24, 26 is shown which rotatably couple the first and second flaps 14, 16 to the frame member 12.

Specifically, each of the first and second flaps 14, 16 is rotatably coupled to a first rod 24 and to a second rod 26. For doing so, first pivot joints 28 are provided which are obstructed in Figure 4, but are visible in Figures 5-7. Each first pivot joints 28 directly couples and/or contacts the respective flap 14, 16 and rod 24, 26 that are connected by said first pivot joint 28. For example, one of the respectively coupled flap 14, 16 and rod 24, 26 may have a recess or through-hole in which a pin comprised by the respectively other of the coupled flap 14, 16 and rod 24, 26 is rotatably be received.

Moreover, the first rods 24 and second rods 26 are each rotatably coupled to the frame member 12. For this purpose, second pivot joints 30 are provided. These may generally be configured similar to the first pivot joints 28. Accordingly, it may e.g. be provided that one of the frame member 12 and a respectively coupled rod 24, 26 may have a recess or through-hole in which a pin comprised by the respectively other of the coupled flap 14, 16 and rod 24, 26 is rotatably received.

For one of the second pivot joints 30, an axis of rotation R is indicated in Figure 4. In the shown example, the axes of rotation R of all first and second pivot joints 28, 30 extend in parallel to one another.

The second rods 26 are coupled to one another by a pin-slot-coupling 32. The pin-slot-coupling 32 comprises a pin 34 provided at one of the second rods 26. This pin 34 is received in a slot 36 provided in the respective other one of the second rods 26. Thus, when a non-illustrated actuator moves one of the second rods 26, this movement is converted into a respective movement of the respectively other second rod 26 by way of the pin-slot-coupling 32.

The connection of the first and second flaps 14, 16 to the frame member 12 by the plurality of rods 24, 26 and the plurality of pivot joints 28, 30 enables that the rods 24, 26 are rotatable relative to the frame member 12, while also rotating the first and second flaps 14, 16. This becomes further evident from Figures 5-7 discussed below. Note that this would also be achievable - and is covered by respective embodiments of this invention - with connecting members that are different from the rod-configuration of the depicted embodiment.

Figures 5-7 show a plurality of identically configured aero shutters 10 received in a common frame member 12. Specifically, each of the aero shutters 10 is configured according to the aero shutter 10 of Figures 1-4.

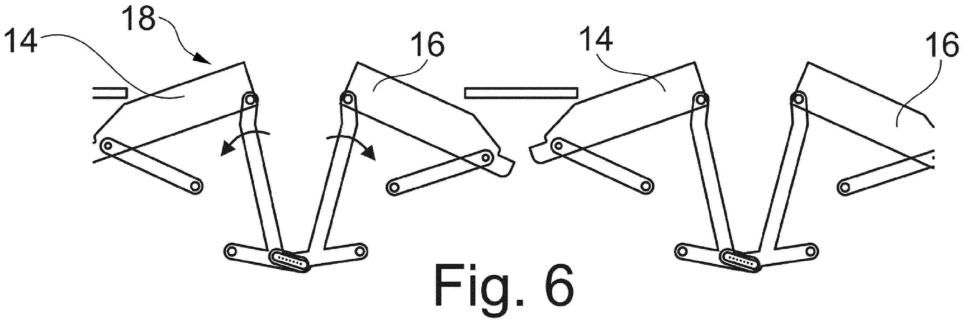

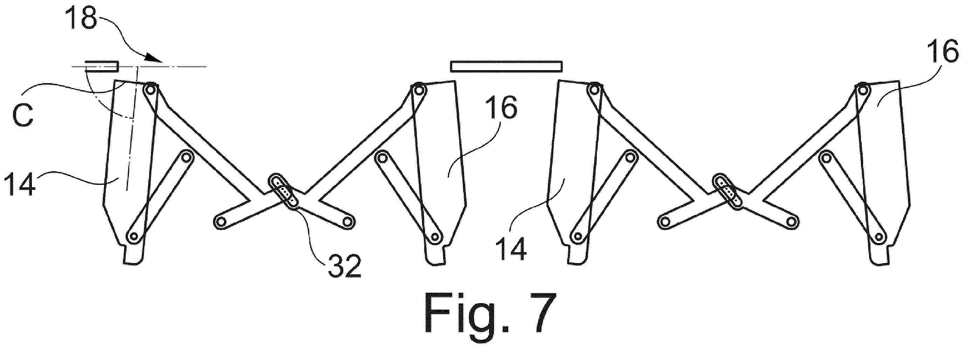

Figure 5 shows a closed state of the aero shutters 10 similar to Figure 1. Sections of the frame member 12 and marked with a respective reference sign in Figure 5. Also, for one of the aero shutters 10 in Figure 5, numerous members that were partially discussed above with respect to Figures 1-4 are marked with respective reference signs. These members are not specifically marked for all of the aero shutters 10 in Figures 5 to 7, although they are comprised by each of said aero shutters 10. Further, it should be noted that some sections of the aero shutters 10 are cut-off for illustrative purposes in Figures 6, 7. Nonetheless, these Figures 6, 7 depict the same aero shutters 10 as Figure 5. Still further, the following discussion may partially focus on only one aero shutter 10, although all aero shutters 10 are configured and operate identically.

In Figures 5-7, the axes of rotation of the first and second pivot joints 28, 30 are not specifically illustrated. Yet, for each of these pivot joints 28, 30, said axes of rotation extend orthogonally to the image plane.

In the closed state of Figure 5, a front face of each first and second flap 14, 16 extends substantially in parallel to a front face of the frame member 12 and to an area of the opening 18. Further, one can see that the first pivot joints 28 are positioned at opposite edge regions of each of the first and second flaps 14, 16. This e.g. applies when viewed along an axis B extending within the cross-sectional area of the opening 18 and being in particular a horizontal or vertical spatial axis.

For the right aero shutter 10 in Figure 5, a (e.g. maximum) width dimension W is indicated for one of the flaps 14, 16. This width dimension W extends along the axis B (which for illustrative reasons is only indicated for the left aero shutter 10 of Figure 5). It is thus visible that a distance between the first pivot joints 28 to which each flap 14, 16 is coupled is almost as large as said width dimension W and e.g. at least half as large.

Further, the first and second rods 24, 26 are configured as elongated members. The first and second pivot joints 28, 30 to which the first and second rods 24, 26 are respectively coupled are positioned at opposite ends of each rods 24, 26.

In the shown embodiment, the second rods 26 have one another end section coupled to the second pivot joints 30. These end sections are coupled to each other by means of the coupling portion 32 explained with respect to Figure 4.

Still further, Figure 5 depicts that at least portions 36 of outer edges of the first and second flaps 16, 18 which face away from a non-specifically indicated geometric centre of the opening 18 overlap with adjacent edges of the frame member 12. Specifically, they overlap with a rear face of the frame member 12.

Figure 6 shows a partially opened state of the aero shutters 10 similar to Figure 2. In the shown embodiment, in each of the aero shutters 10 one of the second rods 26 has received a force from a non-illustrated actuator, said force rotating the second rod 26 as indicated by curved arrows in Figure 6. By way of pin-slot-coupling 32, this movement is transferred to the respective other second rod 26. Accordingly, the second rods 26 rotate in opposite directions and thus away from one another. This also moves and in particular rotates the first and second flaps 14, 16 apart from one another and/or away from and/or at least partially out of the cross-sectional area of the opening 18. Also, the first rods 26 move in accordance with the movements of the respectively associated 14, 16 and second rod 28.

As a result, increasing sections of the opening 18 are no longer covered or obstructed by the flaps 14, 16, so that more air may stream from outside through the opening 18. Rather, the flaps 14, 16 are rotated inwardly and are at least partially retracted into the vehicle.

Figure 7 shows a fully opened state of the aero shutters 10 similar to Figure 3. In this state, for each aero shutter 10 the first and second flaps 14, 16 extend substantially orthogonally to the opening 18. Moreover, they are no longer aligned with the frame member 12 and in particular with a front face thereof. Instead, an angle C of close to 90° (e.g. at least 75°) is defined between the frame member 12 and each first and second flap 14, 16. Only by way of example, this angle C is illustrated with respect to a middle or centre plane of one of the first flaps 14 in Fig. 7 along which said flap 14 extends. Yet, a similar angle C could e.g. be defined with respect to a front face of any of the first and second flaps 14, 16. As a result, the opening 18 is substantially fully unobstructed.

From Figure 7, although not indicated with specific reference signs, it can also be gathered that a relative arrangement between the pin and slot of the pin-slot-coupling 32 has significantly changed compared to Figures 5 and 7. For example, in Figure 5 the pin is received close to a first end of the slot, whereas in Figure 7 a distance to this first end has significantly increased, e.g. is at least 1.5 times as large.

Of course, for closing the opening 18, an opposite sequence of movements takes place. This sequence starts from Figure 7 and is followed by the state of Figure 6 until the closed state of Figure 5 is arrived at.

## Claims

1. An aero shutter (10) for a vehicle, comprising:
- a frame member (12) having at least one opening (18) through which air can flow;
- at least a first flap (14),
- at least a first connecting member (24) and a second connecting member (26);
wherein each of the first connecting member (24) and the second connecting member (26) is connected to the first flap (14) by a respective first pivot joint (28), and wherein each of the first connecting member (24) and the second connecting member (26) is connected to the frame member (12) by a respective second pivot joint (30),
wherein the first and the second connecting member (24, 26) are rotatable about their respective first and second pivot joints (28, 30) so as to move the first flap (14) between a closed state in which it covers at least part of the opening (18) and an opened state in which it does not cover the opening (18) or only covers a smaller part thereof compared to the closed state.

2. The aero shutter (10) of claim 1,
wherein the first pivot joints (26) are positioned at opposite edge regions of the first flap (14).

3. The aero shutter (10) of any of the previous claims,
wherein a distance between the first pivot joints (26) is at least half as large as a width dimension (W) of the first flap (14), wherein the width dimension (W) extends orthogonally to rotation axes (R) of the first pivot joints (26).

4. The aero shutter (10) of any of the previous claims,
wherein the axes of rotation (R) of the first and second pivot joints (26, 28) extend in parallel to the opening (18).

5. The aero shutter (10) of any of the previous claims,
wherein the first flap (14) has a least one portion (36) that in the closed state overlaps with an edge region of the frame member (12) that is adjacent to the opening (18).

6. The aero shutter (10) of any of the previous claims,
wherein the first flap (14) has at least one protruding section (20) that in the closed state protrudes relative to the opening (18).

7. The aero shutter (10) of claim 6,
wherein the protruding section (20) is connected to at least one edge region of the first flap (14) by an angled section (22) or by a curved section.

8. The aero shutter (10) of any of the previous claims,
wherein in the closed state, at least a portion of an outwards facing front face of the first flap (14) is substantially aligned with and/or substantially extends in parallel to at least a portion of an outwards facing front face of the frame member (12).

9. The aero shutter (10) of any of the previous claims,
wherein in the opened state, the first flap (14) extends at a larger angle (C) to the frame member (12) and/or to the opening (18) compared to the closed state, in particular wherein said angle (C) is at least 25° larger than in the closed state.

10. The aero shutter (10) of any of the previous claims,
wherein in the opened state, the first flap (14) extends substantially orthogonally to the opening (18).

11. The aero shutter (10) of any of the previous claims,
wherein in the opened state, the first flap (14) is at least partially retracted with respect to the opening (18) and/or the frame member (12).

12. The aero shutter (10) of any of the previous claims,
comprising a second flap (16) and a further first connecting member (24) and a further second connecting member (26), wherein each of the further first connecting member (24) and the further second connecting member (26) is connected to the second flap (16) by a respective first pivot joint (28), and wherein each of the further first connecting member (24) and the further second connecting member (26) is connected to the frame member (12) by a respective second pivot joint (30).

13. The aero shutter (10) of claim 12,
wherein at least one of the first connecting member (24) and second connecting member (26) connected to the first flap (14) is coupled to one of the further first connecting member (24) or further second connecting member (26) connected to the second flap (16), so that a rotation of the coupled one of the first connecting member (24) and second connecting member (26) results in a rotation of the respectively coupled further first connecting member (24) or further second connecting member (26).

14. The aero shutter (10) of claim 13,
wherein the coupling between the respective one of the first connecting member (24) or second connecting member (26) and the further first connecting member (24) or further second connecting member (26) comprises a pin-slot-coupling (32).

15. The aero shutter (10) of any claims 12-14,
wherein the first flap (14) and second flap (16) are configured to rotate in opposite directions for changing between the closed state and the opened state.
